# FASCICULE DE BREVET EUROPEEN

(11) **EP 1 000 332 B1**
(45) Date de publication et mention de la délivrance du brevet: **12.06.2002**
(21) Numéro de dépôt: 98903107.5
(22) Date de dépôt: 23.01.1998
(51) Int. Cl.: G01L 3/10, G01L 5/22

(54) **DISPOSITIF DE MESURE D'UN COUPLE SUR UN ARBRE TOURNANT**
GERÄT ZUR MESSUNG DER TORSION AN EINER ROTIERENDEN WELLE
DEVICE FOR MEASURING TORQUE ON A ROTATING SHAFT

(30) Priorité: 28.03.1997 FR 9703828
(43) Date de publication de la demande: 17.05.2000
(73) Titulaire: SNR ROULEMENTS, 74010 Annecy Cédex (FR)
(72) Inventeur: BOCHET, Alain, F-74600 Seynod (FR); NICOT, Christophe, F-74330 Epagny (FR)
(74) Mandataire: Fernandez, Francis Lionel
(86) Numéro de dépôt international: FR9800116
(87) Numéro de publication internationale: WO9844323

(56) Documents cités:
- EP-A- 0 535 422
- EP-A- 0 576 310

## Description

L'invention concerne un dispositif de mesure de couple monté sur un arbre tournant appliqué à une direction assistée.

L'invention concerne plus précisément un dispositif de mesure de couple sur un arbre tournant du type comportant un générateur de champ magnétique situé dans le plan d'une section droite dudit arbre et un détecteur qui délivre un signal proportionnel au couple de torsion de l'arbre par suite du décalage angulaire relatif du générateur de champ par rapport au détecteur.

La publication "Le journal de l'Automobile" n° 510 du 01.12.1995 décrit une colonne de direction pour dispositif de direction assistée. Cette colonne est équipée d'un dispositif capteur de couple qui délivre un signal proportionnel au couple de torsion, fixé à un arbre d'entrée actionné par le volant de direction et connecté à une barre de torsion. La dite colonne est également équipée d'une roue à vis sans fin portée par un arbre de sortie actionnée par un moteur électrique piloté en fonction du signal électrique délivré par le capteur de couple. Des moyens limiteurs additionnels de couple sont aménagés entre l'arbre d'entrée et l'arbre de sortie compte tenu de la faible section de la barre de torsion. Le capteur de couple et la vis sans fin sont logés dans un aménagement proéminent du tube de la colonne de direction. Le déplacement angulaire entre les arbres d'entrée et de sortie est converti en un mouvement axial du palier de l'arbre d'entrée et le déplacement de cet arbre est converti en un mouvement rotatif avec délivrance d'un signal électrique représentatif du couple de commande de la direction.

La publication FR-A-2692986 décrit un dispositif mécanique de mesure d'un couple de torsion intégré à une colonne de direction, dont le principe repose sur la mesure de microdéplacements sous effort de torsion, de deux sections d'un arbre de forte rigidité. L'ensemble du dispositif est disposé dans la colonne de direction, et est associé aux circuits électroniques de traitement et au câble spirale d'alimentation et de sortie du signal vers le boîtier de calcul du dispositif de direction assistée. Cette disposition compacte qui facilite l'exploitation de variantes de réalisation du circuit, ne permet pas de limiter l'encombrement radial aux dimensions extérieures du tube de colonne.

L'invention a pour objet un dispositif de mesure d'un couple qui remédie au problème d'encombrement précité par suite de l'incorporation individuelle de modules électroniques constitutifs du circuit de traitement dans un boîtier de mesure monté sur une colonne de direction.

L'invention a encore pour objet un dispositif de mesure d'un couple dont une partie des modules, dits de réglage, est montée amovible, et est incorporée dans le volant de direction.

L'invention a encore pour objet un mode de raccordement des modules du dispositif de mesure dont la mise en oeuvre est facilitée par l'emploi de moyens de connexion simplifiés.

L'invention a également pour objet des moyens de transmission du mouvement de rotation d'un volant de direction à un arbre de direction avec interposition de moyens de raccordement des modules électroniques.

Selon l'invention un premier circuit électronique intérieur à la colonne de direction du véhicule est fixé à un support concentrateur du champ magnétique et se déplace devant le générateur dudit champ conjointement avec un moyen mécanique amplificateur des déplacements relatifs de deux sections droites de l'arbre tournant, et porteur de capteurs de déplacement délivrant des signaux à un deuxième circuit électronique de traitement desdits signaux extérieurs à la colonne de direction, en vue de la délivrance de signaux d'actionnement de dispositifs récepteurs par l'intermédiaire d'un boîtier de transfert.

Le dispositif ainsi réalisé peut être monté dans le volant et raccordé par exemple à un câble spirale utilisé de façon usuelle en vue du déclenchement d'un sac gonflable de rétention d'un passager de véhicule.

L'arbre de torsion de forte section, dont l'emploi est possible du fait de la sensibilité élevée du dispositif de mesure utilisé, permet de supporter l'intégralité du couple de commande et d'éviter l'utilisation de moyens limiteurs additionnels tels que des butées mécaniques.

Par suite de sa simplicité de conception et de la modularité proposée, l'encombrement de la colonne de direction peut être faible et n'est pas modifié par le dispositif de mesure de couple.

D'autres caractéristiques et avantages de l'invention apparaîtront à la lecture de la description d'un exemple de réalisation du dispositif faite en référence aux dessins annexés dans lesquels :
- la figure 1 est une vue en coupe longitudinale du montage d'application du dispositif sur un arbre tournant,
- la figure 2 est une représentation schématique en perspective du dispositif de détection de champ magnétique,
- la figure 3 est une représentation en coupe du circuit extérieur à la colonne de direction.

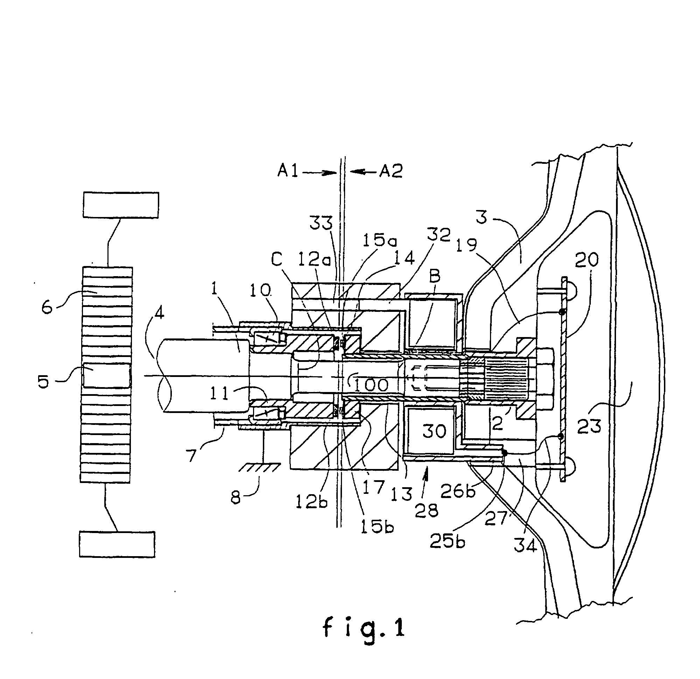

En référence à la figure 1, un arbre tournant 1 de colonne de direction est destiné à être relié par son extrémité 2 à un volant de commande 3, et par son extrémité 4, à un pignon récepteur 5 destiné à la commande d'une crémaillère de direction 6.

L'arbre 1 est entouré par le cylindre tubulaire 7 d'une colonne de direction montée dans un support schématisé par la référence 8.

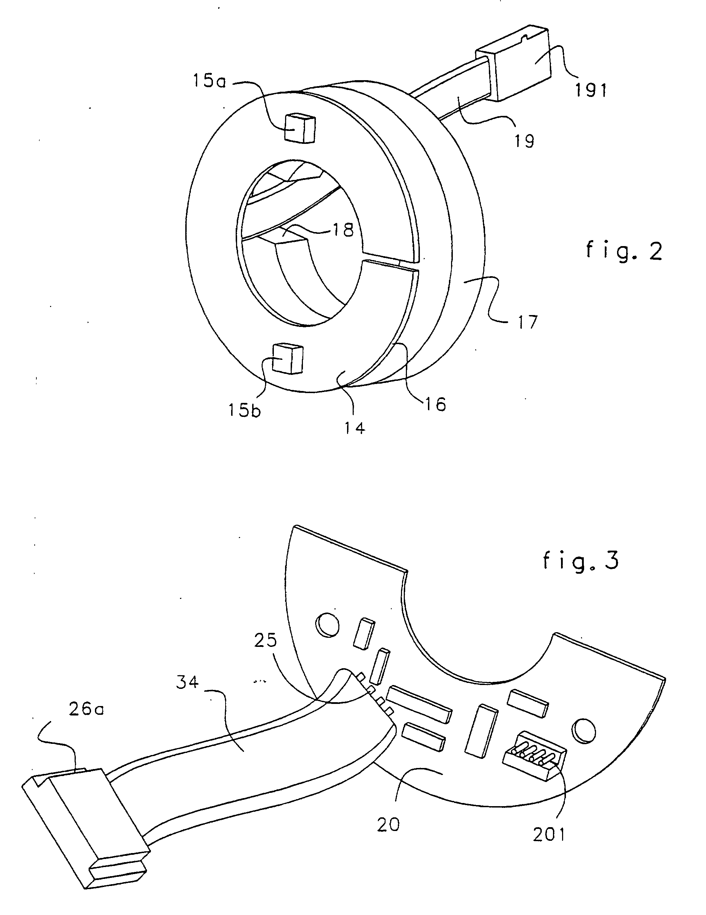

La colonne de direction porte intérieurement un palier 10 d'un moyeu tournant 11 qui supporte un générateur de champ magnétique 12. Le moyeu 11 et le générateur 12 sont réalisés en un matériau ferromagnétique et situés dans le plan d'une section droite A1 de l'arbre 1. Le générateur 12 est constitué ainsi que cela est connu par deux éléments 12a, 12b diamétralement opposés situés symétriquement dans le plan de la section A1 de l'arbre 1. On a intégré à l'arbre 1 le tronçon 100 d'une barre de torsion dont deux sections B et C sont respectivement solidaires d'un moyen mécanique de rappel angulaire constitué par un manchon de raccordement 13 à l'arbre 1 et au moyeu 11. Le moyeu 11 et le manchon 13 s'étendent en direction du plan de la section A1. La sensibilité du capteur de couple est directement proportionnelle à la longueur de la barre de torsion et donc à la distance entre les sections B et C. A l'extrémité libre du manchon 13 est fixé un premier circuit électronique de détection 14 intérieur à la colonne de direction et qui est constitué notamment par des capteurs à effet Hall 15a et 15b situés dans le plan d'une section droite A2 de l'arbre 1 et comme le montre la figure 2, montés sur un circuit imprimé 16 lui même fixé sur un support 17 concentrateur de champ magnétique rigidement relié au manchon 13.

Le premier circuit électronique 14 porte ici une série de composants d'amplification et/ou de filtrage du dispositif mesureur du couple et d'amplification ainsi que les composants électroniques spécifiques à chaque récepteur actionné.

Le support 17 possède une rainure axiale 18 de passage d'un câble plat 19 qui assure la liaison par un élément de connexion 191 entre le premier circuit électronique 14 et l'élément connecteur 201 d'un deuxième circuit mobile de traitement 20, comme le montre la figure 3, extérieur à la colonne de direction et monté dans le volant 3.

Le circuit mobile de traitement 20 est monté dans une cavité 21 du volant de direction 3 et ancré sur le fond de ladite cavité. La cavité 21 est fermée par un couvercle fonctionnel 22 vissé au corps du volant 3.

A titre d'exemple le couvercle 22 peut contenir un récepteur tel qu'un sac gonflable de retenue représenté schématiquement sous la référence 23 du conducteur du véhicule.

Le circuit extérieur 20 possède également un ensemble de broches de connexion 25 auquel se raccorde le câble 34 dont l'extrémité comporte un connecteur 26a de branchement vers un connecteur de liaison 26b. Le câble 34 emprunte un passage 27 aménagé dans le volant 3 pour être raccordé au câble spiral de commande du sac gonflable 23.

Le connecteur de liaison 26 constitue l'élément d'entrée d'un boîtier de transfert 28 dans lequel est enroulé un câble plat représenté schématiquement sous la référence 30 monté dans une cartouche dont la broche de sortie fixe 32 permet le branchement d'un connecteur 33 d'alimentation et d'actionnement du dispositif de mesure du couple.

## Revendications

1. Dispositif de mesure d'un couple sur un arbre tournant (1) d'une colonne de direction de véhicule incluant un générateur de champ magnétique (12) situé dans le plan d'une section droite (A) dudit arbre (1) et un détecteur qui délivre un signal proportionnel au couple de torsion de l'arbre (1) par suite du décalage angulaire relatif du générateur de champ par rapport au détecteur, **caractérisé par le fait qu'**un premier circuit électronique (14) intérieur à la colonne de direction est fixé à un support (17) concentrateur du champ magnétique et se déplace devant le générateur dudit champ (12) conjointement avec un moyen mécanique de rappel (13) angulaire de deux sections de l'arbre tournant (1), et porteur de capteurs de mesure (15) délivrant des signaux à un deuxième circuit électronique (20) de traitement desdits signaux, extérieur à la colonne de direction en vue de la délivrance de signaux d'actionnement de dispositifs récepteurs par l'intermédiaire d'un boîtier de transfert (28).

2. Dispositif selon la revendication 1, **caractérisé par le fait que** le moyen mécanique de rappel angulaire est constitué par un support tubulaire (13) solidaire d'un arbre de torsion (100) qui s'étend en direction de l'extrémité dudit arbre (100) et que l'extrémité dudit support tubulaire (13) porte le disque (16) concentrateur du champ magnétique sur lequel est fixé le premier circuit électronique (14) intérieur à la colonne de direction à partir duquel s'étend un câble d'alimentation et de connexion (19), en direction du deuxième circuit (20) extérieur à la colonne de direction et incorporé au volant de direction (3) du véhicule.

3. Dispositif selon la revendication 1, **caractérisé par le fait que** le premier circuit électronique (14) porte des composants d'amplification et/ou de filtrage du dispositif de mesure et d'amplification et des composants spécifiques à chaque récepteur actionné.

4. Dispositif selon la revendication 2, **caractérisé par le fait que** le circuit extérieur (20) à la colonne de direction est monté dans une cavité (21) du volant de direction (3), fermée par un couvercle fonctionnel (22) et ancré sur le fond de ladite cavité (21).

5. Dispositif selon l'une quelconque des revendications 1, 2 ou 4, **caractérisé par le fait que** le connecteur (25) du circuit extérieur (20) assure le branchement conjoint d'un récepteur à sac. gonflable et d'un connecteur (26) fixé au volant (3) d'alimentation d'un boîtier (28) relié au dispositif de mesure du couple.

## Patentansprüche

1. Momentmessvorrichtung an einer Drehwelle (1) einer Lenksäule eines Fahrzeugs, umfassend einen Magnetfeldgenerator (12), der in der Ebene eines Querschnitts (A) der Welle (1) angeordnet ist, und einen Detektor, der infolge der relativen Winkelverschiebung des Feldgenerators in Bezug auf den Detektor ein Signal liefert, das proportional zum Torsionsmoment der Welle (1) ist, **dadurch gekennzeichnet, dass** eine erste elektronische Schaltung (14) innerhalb der Lenksäule an einer Halterung (17) zur Konzentration des Magnetfelds befestigt ist und sich vor dem Generator des Felds (12) gemeinsam mit einem mechanischen Mittel (13) zur Winkelrückstellung von zwei Querschnitten der Drehwelle (1) bewegt, das Bewegungssensoren (15) trägt, die Signale an eine zweite elektronische Schaltung (20) zur Verarbeitung der genannten Signale außerhalb der Lenksäule sendet, und zwar im Hinblick auf die Ausgabe von Signalen zur Aktivierung von Auffangvorrichtungen unter Zwischenschaltung eines Verteilergetriebes (28).

2. Vorrichtung nach Anspruch 1, **dadurch gekennzeichnet, dass** das mechanische Mittel zur Winkelrückstellung durch eine fest mit einer Torsionswelle (100) verbundene rohrförmige Halterung (13) gebildet ist, die sich in Richtung des Endes der Welle (100) erstreckt, und dass das Ende der rohrförmigen Halterung (13) die Scheibe (16) zur Konzentration des Magnetfelds trägt, an der die erste elektronische Schaltung (14) innerhalb der Lenksäule befestigt ist, von der ausgehend sich ein Speise- und Anschlusskabel (19) in Richtung auf die zweite Schaltung (20) erstreckt, die sich außerhalb der Lenksäule befindet und in das Lenkrad (3) des Fahrzeugs eingebaut ist.

3. Vorrichtung nach Anspruch 1, **dadurch gekennzeichnet, dass** die erste elektronische Schaltung (14) Bauteile zur Verstärkung und/oder zur Filterung der Mess- und Verstärkungsvorrichtung und Bauteile, die für jede aktivierte Auffangvorrichtung spezifisch sind, trägt.

4. Vorrichtung nach Anspruch 2, **dadurch gekennzeichnet, dass** die Schaltung (20) außerhalb der Lenksäule in einer Höhlung (21) des Lenkrads (3) montiert ist, die durch einen funktionsbeteiligten Deckel (22) verschlossen ist, und am Boden der Höhle (21) verankert ist.

5. Vorrichtung nach einem der Ansprüche 1, 2 oder 4, **dadurch gekennzeichnet, dass** das Verbindungsstück (25) der externen Schaltung (20) den gemeinsamen Anschluss einer Auffangvorrichtung in Form eines Airbags und eines am Lenkrad (3) befestigten Verbindungsstücks (26) zur Speisung eines Getriebes (28), das mit der Momentmessvorrichtung verbunden ist, sichert.

## Claims

1. Device for measuring torque on a rotating shaft (1) *of* a vehicle steering column, including a magnetic field generator (12) located in the plane of a cross-section (A) of said shaft (1) and a detector that delivers a signal proportional to the torque of the shaft (1) as a result of the relative angular displacement of the field generator with respect to the detector, **characterised by** the fact that a first electronic circuit (14) inside the steering column is fixed to a support (17) concentrating the magnetic field and moves in front of the generator (12) of said field together with a mechanical angular return travel means (13) for two sections of the rotating shaft (1), and carries measuring sensors (15) delivering signals to a second electronic circuit (20) for processing said signals, outside the steering column, in order to deliver signals for actuation of receiving devices by means of a transfer unit (28).

2. Device according to claim 1, **characterised by** the fact that the mechanical angular return means is constituted by a tubular support (13) fixed to a torque shaft (100) that extends in the direction of the extremity of said shaft (100) and that the extremity of said tubular support (13) carries the disc (16) concentrating the magnetic field on which is fixed the first electronic circuit (14) inside the steering column, from which extends a supply and connection cable (19) in the direction of the second circuit (20) outside the steering column and incorporated into the steering wheel (3) of the vehicle.

3. Device according to claim 1, **characterised by** the fact that the first electronic circuit (14) carried amplifier and/or filter components and components specific to each receiver actuated.

4. Device according to claim 2, **characterised by** the fact that the circuit (20) outside the steering column is mounted in a cavity (21) of the steering wheel (3) closed by a functional cover (22) and anchored onto the base of said cavity (21).

5. Device according to any one of claims 1, 2 or 4, **characterised by** the fact that the connector (25) of the outside circuit (20) provides connection jointly of an inflatable bag and a connector (26) fixed to the steering wheel supplying a unit (28) connected to the torque measuring device.
